# EUROPÄISCHE PATENTSCHRIFT

(11) **EP 2 546 151 B1**
(45) Veröffentlichungstag und Bekanntmachung des Hinweises auf die Patenterteilung: **13.08.2014**
(21) Anmeldenummer: 12004449.0
(22) Anmeldetag: 13.06.2012
(51) Int. Cl.: B65B 1/32, B65B 1/36, B65B 37/18, B65B 1/24, B65B 1/04, B65B 29/00, G01G 13/08, G01G 17/02, A24B 3/00, B65B 63/02, B65B 59/00

(54) **Verfahren und Vorrichtung zur Bildung und Verpackung von Portionen aus faserigem Gut**
Method and device for forming and packaging doses from fibrous material
Procédé et dispositif destinés à la formation et à l'emballage de portions de produits fibreux

(30) Priorität: 13.07.2011 DE 102011107687
(43) Veröffentlichungstag der Anmeldung: 16.01.2013
(73) Patentinhaber: Focke & Co. (GmbH & Co. KG), 27283 Verden (DE)
(72) Erfinder: Leifheit, Axel, 27336 Häuslingen (DE); Geske, Hagen, 27356 Rotenburg (DE); Ehlermann, Stefan, 21220 Seevetal (DE)
(74) Vertreter: Aulich, Martin

(56) Entgegenhaltungen:
- EP-A1- 0 248 576
- EP-A1- 1 830 164
- DE-A1- 1 432 669

## Beschreibung

Die Erfindung betrifft ein Verfahren zur Bildung und Verpackung von Portionen aus faserigem Gut, nämlich Tabak, bei dem aus dem faserigen Gut gebildete Einzelportionen des faserigen Guts mit einem Förder einzeln in Richtung einer Maschine zur Verpackung der Einzelportionen in Verpackungseinheiten, nämlich Tabakbeutel, gefördert werden. Die Erfindung betrifft des Weiteren eine Vorrichtung zur Durchführung des Verfahrens.

Eine Vorrichtung, die nach einem derartigen Verfahren arbeitet, ist beispielsweise in der DE 10 2007 023 511 A1 beschrieben. Dort werden mit Hilfe von Portioniereinrichtungen bzw. sogenannten Tabakwaagen einzelne Tabakportionen gebildet, mit denen in Befüllungsstationen einzelne Becher eines Becherförderers beschickt werden. Die Einzelportionen werden dann einer Vorrichtung zur Verpackung derselben in Tabakbeutel zugeführt, nämlich einem sogenannten Beutelpacker. Bei bzw. im Anschluss an die Portionierung werden die Einzelportionen gewogen. Auch in der DE 1432669 A1 wird ein derartiges Verfahren beschrieben.

Die in der Tabakindustrie gängigen Portioniereinrichtungen können jeweils nur Tabakportionen bestimmter Maximalmenge bzw. Maximalmasse bilden. In der Regel sind 50g-Portionen die Obergrenze. Für darüber hinaus gehende Portionsmengen, etwa 100g-Portionen, müssten die Portioniereinrichtungen aufwändig und kostenintensiv umkonstruiert werden.

Ausgehend hiervon ist es Aufgabe der vorliegenden Erfindung, ein Verfahren anzugeben, mit dem ausgehend von von Portioniereinrichtungen vorgegebenen Maximalmassen, die von diesen gebildete Einzelportionen des faserigen Guts aufweisen, Verpackungseinheiten hergestellt werden können, die eine gegenüber dieser Maximalmenge größere Menge an Füllgut aufweisen. Des Weiteren ist es Aufgabe der vorliegenden Erfindung, eine Vorrichtung zur Durchführung dieses Verfahrens anzugeben.

Die Aufgabe wird gelöst durch ein Verfahren mit den Merkmalen des Anspruchs 1 sowie durch eine Vorrichtung mit den Merkmalen des Anspruchs 10.

Erfindungsgemäß werden demnach mehrere der durch den Förderer geförderten Einzelportionen jeweils zu einer Füllportion zusammengefasst, die dann in die Verpackungseinheit gefüllt wird. Beispielsweise bei einem Förderer mit einzelnen Aufnahmen für die Einzelportionen, etwa einem Becherförderer, werden die Einzelportionen in Richtung des Beutelpackers gefördert und, anders als im Stand der Technik, nicht einzeln in die Beutel gefüllt, sondern zu einer größeren bzw. schwereren Füllportion zusammengefasst. So könnten jeweils zwei Einzelportionen zu einer Füllportion doppelter Menge, drei Einzelportionen zu einer Füllportion dreifacher, vier Einzelportionen zu einer Füllportion vierfacher Menge etc. zusammengefasst und in den jeweiligen Beutel gefüllt werden. Die die Füllportion ergebende Anzahl von Einzelportionen wird stromab des Förderers einer Pressstation zugeführt, in der die Einzelportionen miteinander verpresst werden, bevor sie als Füllportion in die ihnen zugeordnete Verpackungseinheit gefüllt werden.

Weitere Merkmale der vorliegenden Erfindung ergeben sich aus den beigefügten Patentansprüchen, der nachfolgenden Beschreibung eines bevorzugten Ausführungsbeispieles sowie aus den beigefügten Zeichnungen.

Darin zeigen:
- Fig. 1: eine Gesamtansicht einer Anlage zur Bildung und Verpackung von Tabakportionen,
- Fig. 2: die Einzelheit II aus Fig. 1 in vergrößerter Darstellung, nämlich einen Teilbereich der Anlage aus Fig. 1 in Seitenansicht, in dem Tabak-Einzelportionen aus den Aufnahmen eines Becherförderers über eine Verteilerstation mit Speicher in eine Pressstation mit Presskammer gefördert werden, dort zu einer Füllportion miteinander verpresst und anschließend mithilfe eines Beutelpackers in Tabakbeutel gefüllt werden,
- Fig. 3: einen Teilbereich der Darstellung aus Fig. 2 in Schrägansicht, insbesondere einen Endabschnitt des Becherförderers, die Verteilerstation, die Pressstation sowie eine Reihe von Tabakbeuteln, die mit den Füllportionen befüllt werden,
- Fig. 4: die Einzelheit IV aus Fig. 2 in vergrößerter Darstellung,

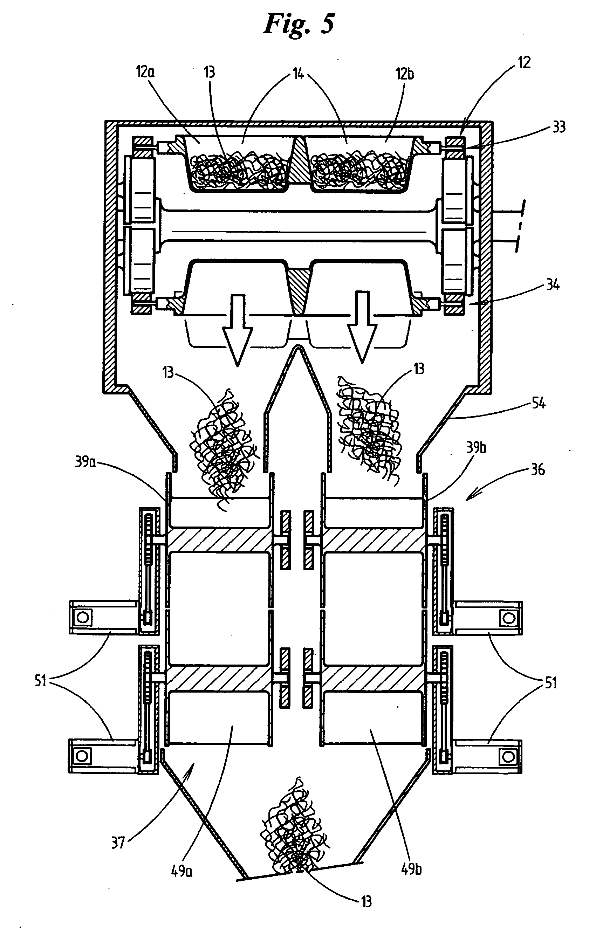

- Fig. 5: einen Schnitt durch die Darstellung gemäß Fig. 4 entlang der Schnittlinie V-V,
- Fig. 6 - 9: einen Schnitt durch die Darstellung aus Fig. 2 entlang der Schnittlinie VI-VI,
- Fig. 10: eine schematische Darstellung der Entleerung der Becher des Becherförderers einerseits in den Speicher der Verteilerstation, andererseits direkt in die Presskammer der Pressstation, sowie der nachfolgenden Befüllung der Tabakbeutel,
- Fig. 11: ein Ablaufdiagramm zur Berechnung der für eine vorbestimmte Füllportion notwendigen Masse der Einzelportionen.

Die Zeichnungen zeigen eine Anlage zur Bildung und Verpackung von einzelnen Portionen aus faserigem Gut, in diesem Fall Schnitt-Tabak.

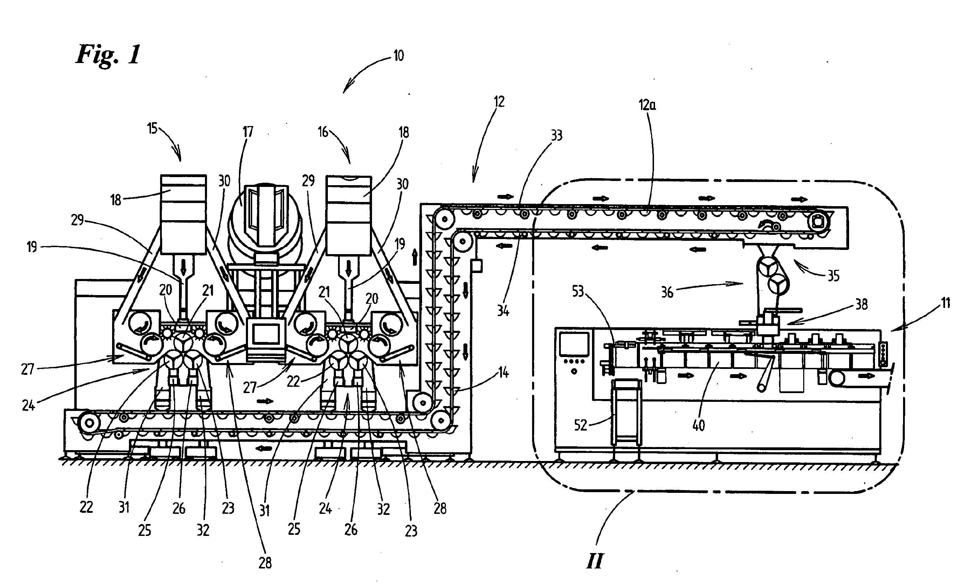

Diese umfasst eine Vorrichtung 10 (Fig.1), in der einzelne Portionen 13 des faserigen Guts gebildet werden sowie eine Verpackungsmaschine 11 - im vorliegenden Fall ein sogenannter Beutelpacker -, in der das faserige Gut in Verpackungseinheiten 40, in diesem Fall Tabakbeutel, verpackt wird. Zwischen der Vorrichtung 10 zur Bildung der Einzelportionen und der Verpackungsmaschine 11 werden die Einzelportionen 13 in Aufnahmen 14 eines (Endlos-)Förderers 12 transportiert, vorliegend in Bechern eines Becherförders, speziell eines Becherkettenförderes.

Die Vorrichtung 10 zur Bildung der Tabakportionen ist im Stand der Technik an sich bekannt und beispielsweise in der DE 10 2007 023 511 A1 beschrieben, deren Inhalt in die vorliegende Anmeldung integriert wird.

Sie weist vorliegend zwei Portioniereinrichtungen bzw. -stationen 15, 16 auf, an denen aus einer Lösetrommel 17 zugeführter Tabak gewogen, portioniert und in die nach oben offenen Aufnahmen bzw. Becher 14 des Förderers 12 gefüllt wird. Solche Portionierstationen werden häufig auch als Tabakwaagen bezeichnet.

Der aus der Lösetrommel 17 austretende Tabakstrom wird dabei in nicht näher beschriebener Weise geteilt, und die einzelnen Teilströme anschließend den Portionierstationen 15 bzw. 16 zugeführt, nämlich oberhalb des Förderers 12 angeordneten Vorratsbehältern 18.

Die technischen Funktionen und Merkmale der beiden Portionierstationen 15, 16 werden im Folgenden exemplarisch - soweit übereinstimmend - anhand der Portionierstation 15 beschrieben.

Innerhalb des Vorratsbehälters 18 bzw. innerhalb eines aufrechten Förderschachtes 19 wird aus dem Tabak des Vorratsbehälters 18 durch konvergierende Gestaltung der Förderbahn in Abwärtsrichtung und durch weitere, hier nicht näher erläuterte Maßnahmen, zunächst ein Tabakvlies gebildet und anschließend ein Tabakstrang, der in dem Förderschacht 19 in Vertikalrichtung nach unten gefördert wird.

Der an dem unteren Ende des Förderschachtes 19 austretende Tabakstrang gelangt anschließend in den Bereich einer Trennvorrichtung 20.

Mittels dieser Trennvorrichtung 20 werden zur Bildung der späteren Tabak-Einzelportionen einzelne Grobportionen Tabak abgetrennt. Diese Grobportionen sind in der Regel gegenüber einem zu erreichenden Soll-Gewicht untergewichtig. Die Trennvorrichtung 20 weist jeweils von den Seiten her in die Tabakstränge eintretende Trennkämme auf. Der Vorratsbehälter 18, der Förderschacht 19 sowie die Trennvorrichtung 20 können dabei beispielsweise so ausgebildet sein wie in der DE 33 16 176 A1 beschrieben.

Die Grobportionen werden jeweils einem zentralen Zwischenförderorgan 21 zugeführt, im vorliegenden Fall einem um eine horizontale Drehachse drehbaren Zellenrad mit mehreren, vorliegend drei um jeweils um 120° in Umfangsrichtung zueinander versetzten Zellen 21.1-21.3 zur Aufnahme von Tabakportionen. Die Zellen oder Taschen 20.1-20.3 sind auf deren in Radialrichtung außenliegenden Seiten offen. Das Zwischenförderorgan 21 weist je nach Drehposition verschiedene Betriebszustände auf. In drei nach oben gerichteten Positionen wird jeweils eine der in diesen Positionen jeweils nach oben zeigenden Zellen 20.1-20.3 befüllt. In jeweils schräg nach unten bzw. zur Seite gerichteten Alternativstellungen kann die Tabak-Grobportion durch deren Eigengewicht aus der jeweiligen Zelle entweichen.

Je nach Drehrichtung wird die in der entsprechenden Zelle 21.1-21.3 positionierte Grobportion Tabak in eines von jeweils seitlich versetzt unterhalb des Zwischenförderorgans 21 angeordneten, vorliegend ebenfalls als Zellenräder ausgebildeten Wiegeorganen 22, 23 einer Wägeeinrichtung 24 gefördert. Die einzelnen Wiegeorgane 22, 23 weisen - wie das Zwischenförderorgan 21 - jeweils mehrere Zellen auf zur Aufnahme der jeweils von dem Zwischenförderorgan 21 zugeförderten Tabak-Grobportion. Funktional sind sie identisch zu dem Zwischenförderorgan 21 ausgebildet. Die Wiegeorgane 22, 23 sind dabei derart seitlich versetzt unterhalb des Zwischenförderers 21 angeordnet, dass eine aus einer je nach Position nach schräg unten weisenden Zelle des Zwischenförderers 21 herausgleitende Grobportion in eine nach oben zeigende Zelle des Wiegeorgans 22 oder 23 fällt.

Die Wiegeorgane 22, 23 wirken darüber hinaus jeweils mit jeweils ihnen zugeordneten Waagen 25, 26 zusammen. Mit Hilfe der Wagen 25, 26 können jeweils die Gewichte bzw. Massen der einzelnen Tabakportionen bestimmt werden, die in der nach oben gerichteten Zelle des jeweiligen Wiegeorgans 22, 23 positioniert sind.

Die Steuerung 50 der Vorrichtung 10 ermöglicht im Weiteren grundsätzlich zwei verschiedene Arten, aus den so gebildeten Grobportionen die späteren, mithilfe des Becherförders 12 geförderten Einzelportionen 13 zu bilden:
Bei einer sogenannten Fein-Portionierung wird - wie angedeutet - zunächst die Masse der jeweiligen Grobportion bestimmt. Sollte diese vorbestimmte Bedingungen nicht erfüllen, beispielsweise insbesondere eine geringere Masse aufweisen als eine vorbestimmte SollMasse, wird der Tabakgrobportion zusätzlicher Tabak hinzugefügt, und zwar über entsprechende Feindosierungsaggregate 27, 28.

Jedes Feindosierungsaggregat 27, 28 weist dabei ein schräg nach unten gerichtetes Band auf, über das aus dem Vorratsbehälter 18 über Zuführschächte 29 bzw. 30 zugeführter Feintabak einer ersten Stachelwalze zugeführt wird. Diese Stachelwalze übernimmt den Tabak und arbeitet mit einer zweiten Stachelwalze zur Bildung einer möglichst gleichmäßigen Tabaklage auf der ersten Stachelwalze zusammen. Durch ein nachfolgendes Stachelrad wird die Tabaklage von der Stachelwalze abgehoben und in hier nicht näher beschriebener Weise der in der entsprechenden, nach oben gerichteten Zelle des Wiegeorgans 22 bzw. 23 angeordneten Grobportion hinzugefügt. Die Feinportionierung, nämlich das Hinzufügen von weiterem Feintabak, erfolgt, bis das Sollgewicht bzw. die Sollmasse erreicht ist, mithin die Grobportion als Gutportion klassifiziert werden kann.

Dabei können in der Steuerung 50 der Vorrichtung 10 verschiedenste Bedingungen hinterlegt sein, dem die abgewogenen Gutportionen genügen müssen, um als Gutportion klassifiziert zu werden, beispielsweise Sollmassengrenzwerte, -intervalle oder dergleichen.

Bei der Alternative zu der beschriebenen Fein-Portionierung, nämlich einer Grob-Portionierung, wird in den Wiegeorganen 22 bzw. 23 ebenfalls die Masse der durch die Trennvorrichtung 20 abgetrennten Grobportion bestimmt. Allerdings wird - anders als bei der oben beschriebenen Fein-Portionierung - darauf verzichtet, der Grobportion über die Feindosierungsaggregate 27, 28 weiteren Tabak hinzuzufügen. Für den Fall, dass die Masse der Grobportion vorbestimmten Bedingungen nicht entspricht, insbesondere größer ist als die für eine Einzelportion vorgeschriebene Maximalmasse, wird die Grobportion ausgeschleust, also nicht weiter verwendet. Ansonsten entspricht die jeweilige Einzelportion 15, die über den Förderer 12 in Richtung der Verpackungsmaschine 11 gefördert wird, der zu Beginn der Portionierung abgetrennten Grobportion.

Aufgrund des ggf. mehrfachen Hinzufügens von Tabak ist das Verfahren der Fein-Portionierung zur Erreichung eines Sollgewichts zwar genauer, durchschnittlich betrachtet aber auch zeitintensiver als das Verfahren der Grob-Portionierung.

Unabhängig davon, ob das Verfahren der Fein- oder der Grobportionierung angewendet wird, wird nach der Klassifizierung einer Portion als Gutportion die nach oben gerichtete Zelle eines der Wiegeorgane 22, 23, in der die jeweilige Gutportion angeordnet ist, derart in Drehung versetzt, dass sie die Gutportion in eine unterhalb des jeweiligen Wiegeorgans 22, 23 angeordnete Zuführung, nämlich aufrechte Zuführschächte 31, 32, entleert.

Die Gutportionen werden über die Zuführungen 31, 32 jeweils einem zentralen, oberhalb von zwei Befülllinien angeordneten Verteilerorgan zugefördert. Die Gutportionen, die dem Wiegeorgan 22, 23 entstammen, werden über die Befülllinien, die als Befüllungsschächte ausgebildet sind, taktweise in die Aufnahmen 14 des Förderers 12 gefüllt und abtransportiert.

Der Förderer 12 ist dabei vorliegend als Doppelbecherkettenförderer ausgebildet, d.h. jeweils zwei parallele Reihen 12a, 12b von hintereinander angeordneten als Becher ausgebildete Aufnahme 14 sind vorhanden. Auf Linien quer zur Förderrichtung sind jeweils paarweise zwei Aufnahme bzw. Becher 14 angeordnet.

Jeder Aufnahmereihe 12a, 12b sind dabei vier Befülllinien zugeordnet, nämlich zwei Befülllinien der Portionierstation 15 und zwei Befülllinien der Portionierstation 16. In Fig. 1 sind nur jeweils die vorderen Befülllinien zu sehen, die die vordere Aufnahmereihe 12a mit Einzelportionen 13 befüllen. Die hintere Aufnahmereihe 12b wird analog durch ebenfalls vier Befülllinien, also zwei Befülllinien der Portionierstation 15 und zwei Befülllinien der Portionierstation 16 mit Einzelportionen 13 befüllt.

Der Förderer 12 weist zur Bildung der parallelen Bahnen 12a, 12b von Aufnahmen 14 mehrere parallele, endlose Förderorgane auf, die vorliegend als endlose Ketten ausgebildet sind, und an denen die Aufnahmen bzw. Becher 14 befestigt sind. Die Ketten bzw. die Aufnahmebahnen 12a, 12b sowie die entsprechenden, den jeweiligen Aufnahmebahnen zugeordneten Aufnahmen 14 laufen parallel und mit Abstand voneinander unter Bildung eines oberen Fördertrums 33 und eines unteren Fördertrums 34. Der Förderer 12 bzw. die beiden Aufnahmebahnen verlaufen im Bereich der beiden Portionierstationen 15, 16 unterhalb der Befüllungslinien horizontal.

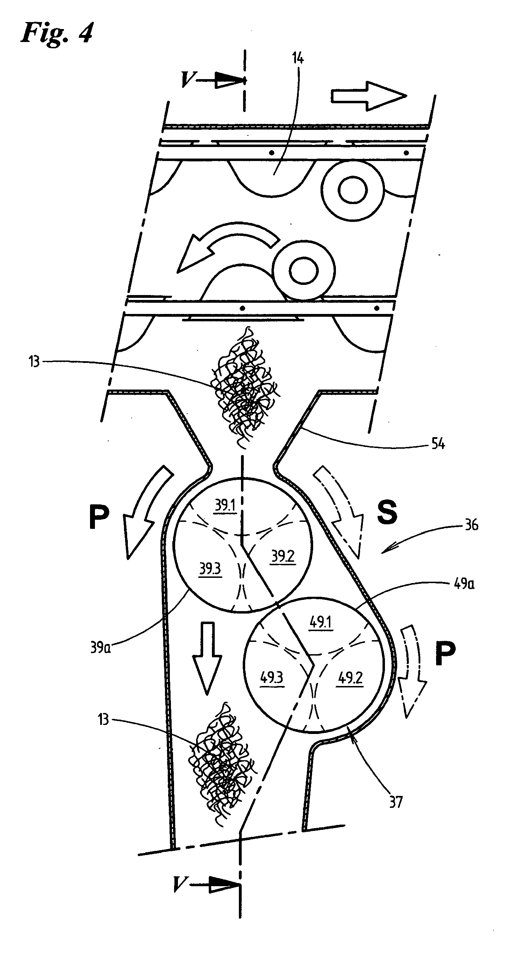

In einer Entlade- bzw. Entleerungsstation 35 werden die mit den Einzelportionen 13 gefüllten Aufnahmen 14 durch Kippen derselben selbsttätig entleert, vgl. insbesondere Fig. 4. Die für eine solche selbsttätige Entleerung geeigneten Mechanismen sind im Stand der Technik bekannt.

Die Entleerung des sich jeweils an der Entladestation 35 befindenden Paares von Aufnahmen 14 erfolgt jeweils in eine Verteilerstation 36.

Die Verteilerstation 36 führt die aus den entleerten Aufnahmen 14 stammenden Einzelportionen 13 entweder einem Speicher 37 zu, in der die Portionen einen gewissen Zeitraum zwischengespeichert werden, oder unmittelbar einer stromab derselben, in diesem Fall unterhalb, angeordneten Pressstation 38.

Die Verteilerstation 36 verfügt über ein Gehäuse 54 mit zwei oberen trichterförmigen Abschnitten, die jeweils im Bereich der Entladestation 35 unter dem der Entladestation 35 zugeordneten Abschnitt des unteren Fördertrums 34 des Förderers 12 angeordnet ist. Unterhalb der trichterförmigen Abschnitte ist in dem Gehäuse 54 wiederum ein Paar von hintereinander (quer zur Förderrichtung) positionierten Verteilerorganen 39a, 39b der Verteilerstation 36 angeordnet.

Jedes Verteilerorgan 39a, 39b ist vorliegend als hier um eine horizontale Achse drehbares Zellenrad ausgebildet mit jeweils um 120° in Umfangsrichtung zueinander versetzten Zellen 39.1-39.3 zur Aufnahme der Tabak-Einzelportionen 13.

Jedes Verteilerorgan 39a, 39b des Verteilerorganpaares ist dabei jeweils einer Reihe der parallel oberhalb desselben angeordneten Aufnahmereihen 12a, 12b des Förderers 12 zugeordnet bzw. der jeweiligen im Bereich der Entladestation 35 angeordneten Aufnahme 14 der ihm zugeordneten Aufnahmereihe 12a, 12b.

Die Zuordnung ist derart, dass die Einzelportionen 13 der vorderen Aufnahmereihe 12a des Förderers 12 an der Entladestation 35 schwerkraftbedingt entlang des jeweiligen trichterförmigen oberen Gehäusebereichs 54 in die nach oben zeigende Zelle 39.1-39.3 des unmittelbar unter dieser Reihe 12a angeordneten, entsprechend vorderen Verteilerorgans 39a fallen können. Entsprechend können die Tabak-Einzelportionen 13 der hinteren Aufnahmereihe 12b in die jeweils nach oben zeigende Zelle 39.1-39.3 des hinteren Verteilerorgans 39b fallen.

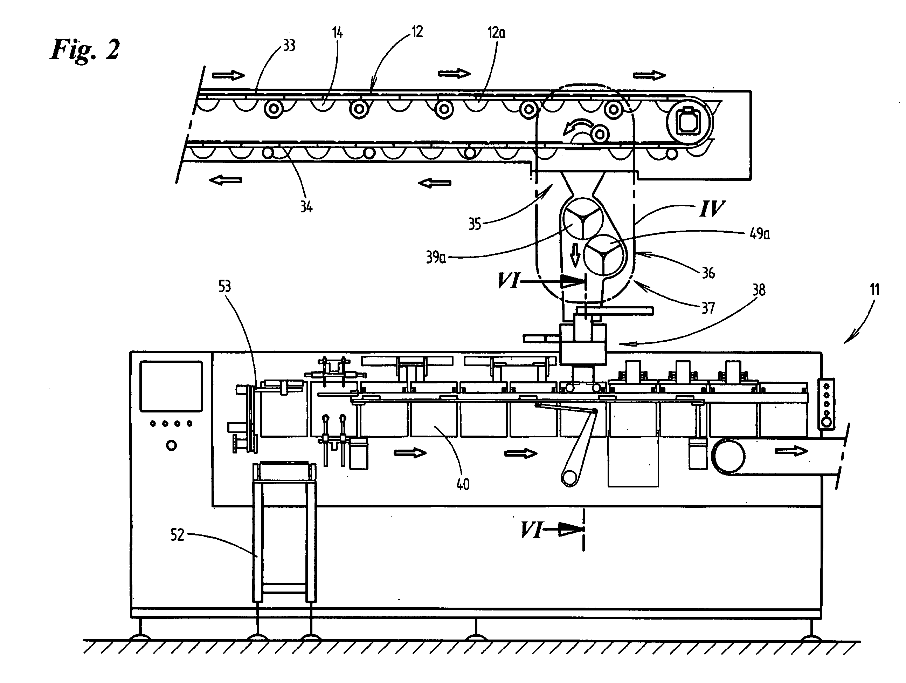

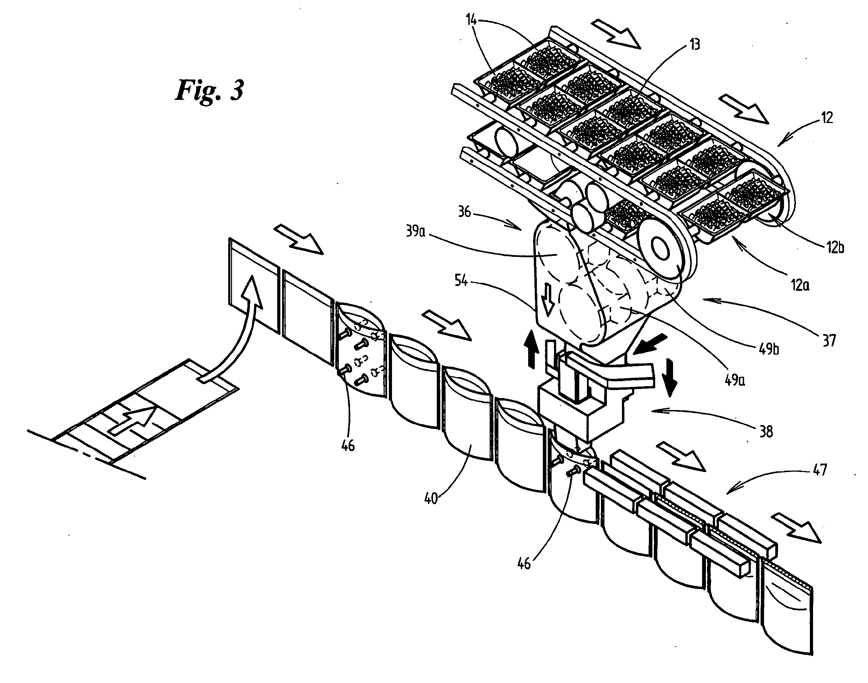

Durch Drehung der unabhängig voneinander drehbar mittels Antriebsaggregaten 51, insbesondere Elektromotoren, angetriebenen bzw. antreibbaren Verteilerorgane 39a, 39b, in einer ersten Richtung, vorliegend entgegen des Uhrzeigersinns, können die Einzelportionen 13, die beim Entladevorgang in die jeweils obere Zelle 39.1-39.3 des jeweiligen Verteilerorgans 39a, b gefallen sind, in die Pressstation 38 weitergeleitet werden (Pfeilrichtung, insbesondere in Fig. 2, Fig. 3).

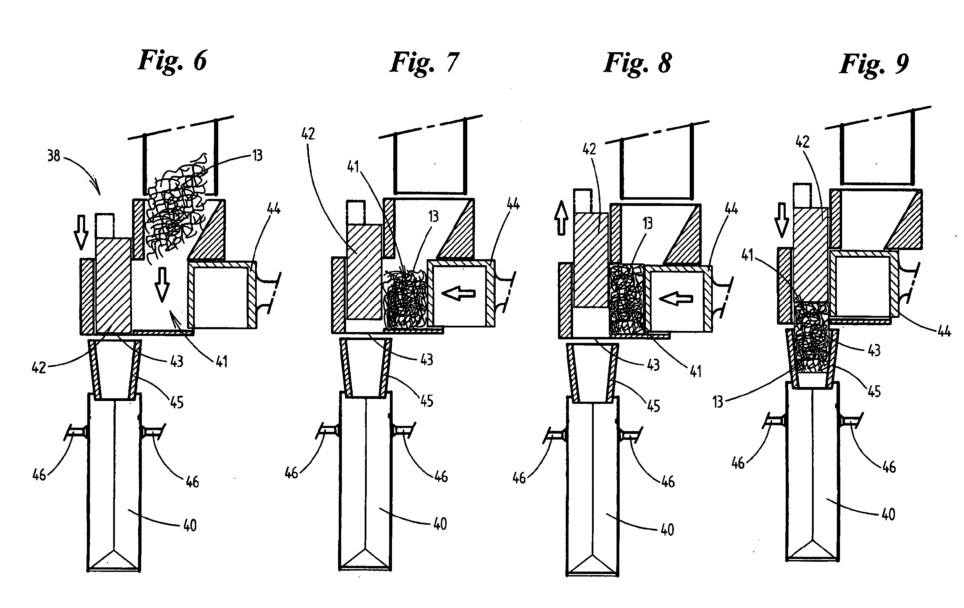

Besonders wesentlich ist, dass erfindungsgemäß mehrere der in den Aufnahmen 14 geförderten Einzelportionen 13 zusammengefasst werden und als Füllportion aus mehreren Einzelportionen 13 in die bereitstehenden Verpackungseinheiten 40, im vorliegenden Fall Tabakbeutel, gefüllt werden. So können beispielsweise jeweils zwei Einzelportionen 13, die sich in den Aufnahmen 14 eines Aufnahmepaares befinden, der Pressstation 38 zugeführt und dort miteinander zu einer Füllportion verpresst werden (Fig. 6-9). Hierbei fallen die Einzelportionen 13 schwerkraftbedingt in eine Presskammer 41 der Pressstation 38.

Die Presskammer 41 wird an einer Seite durch ein vertikal motorisch hin- und her bewegbares Verschlussorgan 42 begrenzt, das eine Öffnung 43 im Boden der Presskammer 41 verschließen kann. Auf der anderen Seite der Presskammer 41 begrenzt ein horizontal ebenfalls motorisch hin- und her bewegbares Pressteil 44 die Presskammer 41.

Zur Verpressung von sich in der Presskammer 41 befindenden Einzelportionen 13 bewegt sich das Pressteil 44 auf das Verschlussorgan 42 zu. Das Volumen zwischen Verschlussorgan 42 und Pressteil 44 wird hierbei verkleinert und die Einzelportionen 13 dabei zu der Füllportion verpresst.

Der Pressbewegung des Pressteils 44 überlagert ist eine Bewegung des Verschlussorgans 42 aus der Stellung, in der die Presskammeröffnung 43 verschlossen ist (Fig. 6), zunächst nach oben (Fig. 7, 8). Schließlich wird bei einer Rückbewegung des Verschlussorgans 42 nach unten (Fig. 9) die Füllportion aus Einzelportionen 13 von oben durch das Verschlussorgan 42 beaufschlagt und aus der Presskammeröffnung 43 nach unten durch einen darunter befindlichen Trichter 45 hindurch in einen unterhalb des Trichters 45 von dem Beutelpacker 11 bereit gehaltenen Beutel 40 gestoßen.

Unterhalb des Trichters 45 wird hierbei mittels eines geeigneten Horizontalförderers des Beutelpackers 11 taktweise jeweils ein aufrecht stehender Beutel 40 einer Reihe von unterhalb des Trichters 45 vorbeigeführter Beutel 40 positioniert und dort gehalten. Sobald ein Beutel 40 unmittelbar unter dem Trichter 45 positioniert ist, wird die Füllportion in den jeweiligen Beutel 40 eingefüllt.

Um die Beutel 40 in dieser Weise bereit halten zu können, werden die Beutel 40 zunächst in einer schuppenartigen Formation mittels eines Zuführgurtes 52 einem Beutelaufrichter 53 zugeführt, der die Beutel 40 vereinzelt und aufrichtet. Im weiteren Verlauf werden sie an durch jeweils an ihrer Vorder- und an der Rückseite angreifende Saugorgane 46 auseinandergezogen, so dass eine obere Einfüllöffnung des Beutels 40 geöffnet wird. Auch an der Befüllposition, an der die Beutel 40 jeweils mit der Füllportion befüllt werden, befinden sich jeweils die Vorder- und Rückseite der Beutel 40 beaufschlagende Saugorgane 46, die die Beutel 40 in ihrer geöffneten Stellung halten.

Die Beutel 40 werden nach dem Befüllvorgang weiter transportiert und an nachfolgenden Schließ- und Schweißstationen 47 geschlossen und verschweißt. Anschließend werden die Beutel mittels eines Förderers 48 abtransportiert.

Auf die geschilderte Weise ist es möglich, beispielsweise zwei, vier, sechs usw. Einzelportionen der Presskammer 41 zuzuführen und dort zu einer Füllportion aus entsprechend zwei, vier, sechs etc. Einzelportionen zu verpressen. Somit können gegenüber dem Stand der Technik größere Füllportionen aus mehreren Einzelportionen hergestellt werden.

Mit den Portionierstationen des Standes der Technik können ansonsten in der Regel nur Einzelportionen hergestellt werden, die eine bestimmte maximale Menge bzw. Masse aufweisen. In der Regel sind dies 50g. Dementsprechend können auch nur Tabakbeutel mit maximal 50g-Portionen hergestellt werden. Die vorliegende Erfindung ermöglicht es, Tabakbeutel mit vielfachen der von den Portioniereinrichtungen maximal herzustellenden Einzelportionen zu produzieren.

In dem vorliegenden Ausführungsbeispiel weist die Verteilerstation 36 - wie oben bereits angedeutet - zudem einen Speicher 37 auf. Dieser umfasst vorliegend zwei seitlich versetzt unterhalb der Verteilerorgane 39a, 39b angeordnete, hier ebenfalls als durch Antriebsaggregate 51 angetriebene, als vorliegend um eine horizontale Achse drehbare Zellenräder ausgebildete Speicherorgane 49a, 49b. Jedes Zellenrad verfügt wie die Zellenräder der Verteilerorgane 39a, 39b über jeweils um 120° in Umfangsrichtung zueinander versetzte Zellen 49.1-49.3 zur Aufnahme von Tabakportionen. Die Zellen 49.1-49.3 sind auf deren in Radialrichtung außenliegenden Seiten offen. Die jeweils nach oben zeigende Zellen 49.1-49.3 wird befüllt. Anstelle der Zellenräder könnten auch andere Verteilerorgane eingesetzt werden, etwa Organe mit schwebbaren Klappen oder dergleichen.

Die beiden Speicherorgane 49a, 49b sind innerhalb des Gehäuses 54 der Verteilerstation 36 angeordnet und jeweils unabhängig voneinander antreibbar bzw. drehbar. Die Kontur des Gehäuses 54 ist derart an die Speicherorgane 49a, 49b angepasst, dass die jeweils schräg nach unten bzw. schräg zur Seite, nämlich in Richtung der Gehäusewand des Gehäuses 54 zeigende bzw. geöffnete Zelle 49.1-49.3 zusammen mit der angrenzenden Gehäusewand einen Speicherraum bildet.

Jedes Zellenrad verfügt über zwei Zellen 49.1-49.3, in denen Einzelportionen 13 gespeichert werden können. Dies ist neben der beschriebenen Zelle 49.1-49.3, die schräg nach unten zur Gehäusewand 54 zeigt, die Zelle 49.1-49.3, die nach oben gerichtet ist. Einzelportionen 13 wiederum, die sich in der schräg nach unten, allerdings von der Gehäusewand weg zeigenden Zelle 49.1-49.3 befinden, werden durch ihr Eigengewicht aus der Zelle 49.1-49.3 ausgeworfen und fallen in die Presskammer 41.

Das vordere Speicherorgan 49a ist dem vorderen Verteilerorgan 39a zugeordnet, das hintere Speicherorgan 49b dem hinteren Verteilerorgan 39b.

Die Verteilerorgane 39a, 39b können Einzelportionen 13 an die Speicherorgane 49a, 49b übergeben. Hierzu müssen die Verteilerorgane 39a, 39b in einer zweiten, zur ersten Richtung entgegengesetzten Richtung, vorliegend jeweils im Uhrzeigersinn, gedreht werden. Die Einzelportionen 13 werden dann in dem Speicher 37 zwischengespeichert und bei Bedarf in die Presskammer 41 entladen, bevorzugt durch Drehung in der ersten Richtung bzw. entgegen dem Uhrzeigersinn.

Die Verwendung des Speichers 37 hat verschiedene Vorteile:
Falls Füllportionen aus n*2 Einzelportionen 13 gebildet werden sollen, wobei n eine gerade Zahl größer oder gleich 1 ist, ist eine Zwischenspeicherung von Einzelportionen 13 beispielsweise dann vorteilhaft, wenn durch beispielsweise einen Fehler in den Portionierstationen 15, 16 nur eines der beiden Aufnahmepaare der Aufnahmen 14 des Förderers 12 mit einer Einzelportion 13 gefüllt ist. Diese Einzelportion 13 kann dann in dem Speicher 37 zwischengespeichert werden, bis zu einem späteren Zeitpunkt durch einen erneuten Fehler wiederum nur eine Aufnahme 14 eines Aufnahmepaares mit einer Einzelportion 13 gefüllt ist. Sobald dann das Aufnahmepaar mit dieser weiteren nur einfach gefüllten Aufnahme 14 in die Presskammer 41 entleert wird, wird zu der Füllportion, die aus dieser Einzelportion 13 gebildet werden soll, die im Speicher 37 befindliche Einzelportion 13 hinzugegeben. Ohne eine derartige Zwischenspeicherung wäre es in einem solchen Szenario dagegen notwendig, die Einzelportion 13 eines nur hälftig gefüllten Aufnahmepaares als Fehlportion auszuschleusen.

Weiter ermöglicht der Speicher 37 die Herstellung von Füllportionen, die nicht dem obigen Muster n*2 entsprechen, sondern dem Muster (2*n + 1) folgen, wobei n eine gerade Zahl größer gleich 1 ist.

Mit anderen Worten können dann Füllportionen aus einer ungeraden Zahl von Einzelportionen 13, etwa aus 3, 5, 7 usw. Füllportionen hergestellt werden.

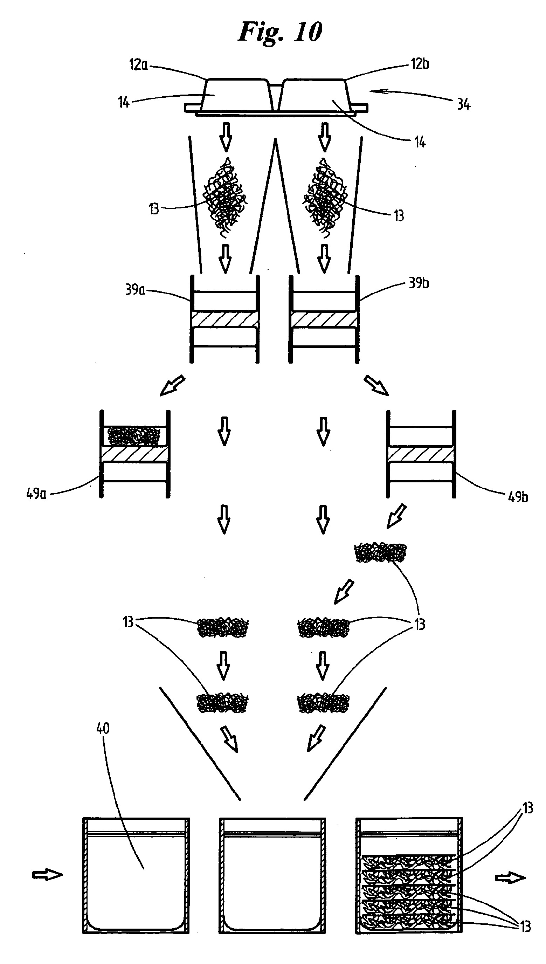

In Fig. 10 ist schematisch die Vorgehensweise bei Herstellung einer Füllportion aus einer ungeraden Anzahl von Einzelportionen 13, nämlich fünf Einzelportionen, dargestellt. Aus Vereinfachungsgründen ist die Presskammer 41 weggelassen worden.

Zur Erzielung einer Füllportion aus fünf Einzelportionen 13 werden am Ende eines ersten Fördertakts des Förderers 12 beide Einzelportionen 13 eines ersten Aufnahmepaares von Aufnahmen 14a, 14b direkt, d. h. ohne Zwischenspeicherung, in die Presskammer 41 entladen, indem die Verteilerorgane 39a, 39b entgegen des Uhrzeigersinns gedreht werden, so dass die Einzelportionen 13 unmittelbar in die Presskammer 41 fallen. In gleicher Weise wird am Ende des nächsten Fördertakts mit den Einzelportionen 13 des nächsten Aufnahmepaares verfahren. Zu diesem Zeitpunkt befinden sich dann vier Einzelportionen 13 in der Presskammer 41.

Die beiden Portionen 13 des nächst folgenden Aufnahmepaares werden dann durch Drehung der Verteilerorgane 39a, 39b in der zweiten Richtung bzw. im Uhrzeigersinn an die beiden Speicherorgane 49a, 49b des Speichers 37 übergeben.

Von den beiden Speicherorganen 49a, 49b wird dann im weiteren Verlauf nur eines der Speicherorgane, beispielsweise das Speicherorgan 49b, im Uhrzeigersinn weitergedreht werden, um die in ihm gespeicherte Einzelportion 13 an die Presskammer 41 zu übergeben. Die in dem anderen Speicherorgan 49a befindliche Einzelportion 13 dagegen wird weiter gespeichert bleiben.

Im Ergebnis werden sich nach drei Fördertakten des Förderers 12 fünf Einzelportionen 13 in der Presskammer 41 befinden. Anschließend werden diese Einzelportionen 13 in der bereits oben beschriebenen Weise zu einer Füllportion verpresst und in die Tabakbeutel 40 eingefüllt.

Zur Herstellung der nächsten Füllportion wird dann die sich noch in dem zweiten Speicherorgan 49a befindliche Einzelportion 13 den Einzelportionen 13 der beiden vorherigen Aufnahmepaare hinzugefügt werden.

In einer weiteren wesentlichen Ausführungsform der Erfindung werden an den Portionierstationen 15, 16 (n-1) Einzelportionen 13, die später zu einer Füllportion der Masse m_{Füllportion} aus n Einzelportionen 13 zusammengefasst werden sollen, in der oben beschriebenen Weise zunächst grob portioniert und gewogen.

Anschließend wird durch Addition der gemessenen Einzelmassen die Gesamtmasse der (n-1) Einzelportionen ermittelt.

In der Portioniereinrichtung 15, 16 wird danach eine weitere Einzelportion 13 fein portioniert. Die Masse dieser fein portionierten Einzelportion 13 wird derart dosiert, dass deren Masse zusammen mit der Gesamtmasse der (n-1) grob portionierten Einzelportionen die Masse m_{Füllportion} die zu bildende Füllgutportion ergibt, zumindest annähernd, vorzugsweise exakt.

Anschließend werden die so portionierten Einzelportionen 13 einzeln an den Förderer 12 übergeben und während der Förderbewegung nachverfolgt, beispielsweise mithilfe von Schieberegistern, sodass bekannt ist, welche Einzelportionen 13 sich jeweils in welcher Aufnahme 14 befinden. Die auf diese Weise nachverfolgten Einzelportionen 13 werden zur Bildung der Füllgutportion dann gemeinsam in die Presskammer 41 gefüllt, ggf. unter Verwendung des Speichers 37, miteinander verpresst und in einen bereit gehaltenen Beutel 40 gefüllt.

Durch diese Vorgehensweise kann bei hoher Geschwindigkeit der Anlage eine gleichzeitig möglichst geringe Differenz der Füllportionsmassen gegenüber vorgegebenen Sollwerten erreicht werden. Denn obgleich Grobportioniervorgänge hoher Geschwindigkeit ablaufen, entspricht die Genauigkeit der Masse der sich ergebenden Füllportionsmenge im Vergleich zum Sollwert derjenigen, die erreicht würde, würde ausschließlich fein portioniert werden. Es genügt dabei, nur eine der Einzelportionen 13 einer Füllportion auf diese Weise fein zu portionieren, um insgesamt eine Füllportionsmenge zu erhalten, die sehr nah an das Sollgewicht herankommt oder diesem entspricht.

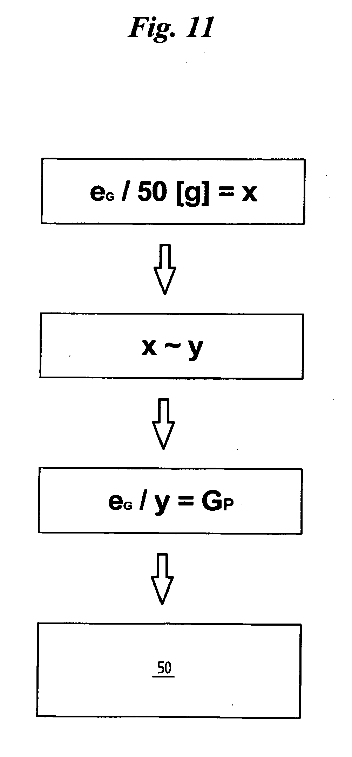

Fig. 11 zeigt schließlich in der Steuerung 50 der Anlage abgelegte Zusammenhänge für den Beispielfall, dass bei maximalen Einzelportionsmassen von 50g, die die Portioniereinrichtungen 15, 16 produzieren können, eine Füllportion der Masse e_{G} hergestellt werden soll.

Wenn die Füllportion e_{G} beispielsweise 160g betragen soll, muss zunächst der Quotient aus der gewünschten Füllportion e_{G} und der maximalen Einzelportionsmasse von 50g gebildet werden. Dieser Quotient wird aufgerundet auf den Wert y, nämlich den nächstgrößeren ganzzahligen Wert. Im vorliegenden Fall würde y den Wert 4 annehmen. Um die Masse (in Gramm) der zur Erzielung der gewünschten Füllportion notwendigen Einzelportionen G_{P} zu berechnen, muss dann der Quotient aus der gewünschten Füllportionsmassen e_{G} und y gebildet werden. Im vorliegenden Fall wäre G_{P} 40g.

Wie der Fachmann des Standes der Technik erkennt, ist die vorliegende Erfindung keinesfalls auf das vorliegende Anwendungsbeispiel beschränkt. So können beispielsweise andere Arten von Verpackungseinheiten verwendet werden, wie etwa Dosen oder dergleichen. Weiter ist die Verpressung der Einzelportionen zur Zusammenfassung zu einer Füllportion zwar sinnvoll, aber nicht zwingend erforderlich. Insgesamt können sämtliche Aggregate, insbesondere die Verteilerstation, die Pressstation, die Portionierstationen, der Speicher etc. grundsätzlich in abweichender Weise ausgebildet werden bzw. einzelne Verfahrensschritte von dem Ausführungsbeispiel abweichen.

## Patentansprüche

1. Verfahren zur Bildung und Verpackung von Portionen (13) aus faserigem Gut, nämlich Tabak, bei dem aus dem Tabak (13) insbesondere taktweise gebildete Einzelportionen (13) des Tabaks mit einem Förderer (12) einzeln in Richtung einer Maschine (11) zur Verpackung der Einzelportionen (13) in Verpackungseinheiten (40), nämlich Tabakbeutel, gefördert werden, **gekennzeichnet durch** folgende Schritte:
(a) mehrere der geförderten Einzelportionen (13) werden einer Pressstation (38) zugeführt, in der die Einzelportionen (13) miteinander verpresst und zu einer Füllportion zusammengefasst werden,
(b) jeweils eine der auf diese Weise gebildeten Füllportionen wird in jeweils einen Tabakbeutel (40) gefüllt.

2. Verfahren gemäß Anspruch 1, **dadurch gekennzeichnet, dass** die Einzelportionen (13) in einzelnen Aufnahmen (14) des Förderers (12) für je eine Portion, insbesondere den Bechern eines Becherförderer, zu der Pressstation (38) gefördert werden, wobei die die Füllportion x ergebenden Einzelportionen (13), insbesondere an einer dem Förderer (12) zugeordneten Entladestation (35), aus den ihnen zugeordneten Aufnahmen (14) des Förderers (12) in die Pressstation (38) überführt werden.

3. Verfahren gemäß einem oder mehreren der vorhergehenden Ansprüche, **dadurch gekennzeichnet, dass** der Förderer (12) paarweise in zwei parallelen Reihen 12a, 12b angeordnete Aufnahmen (14) für die Einzelportionen (13) aufweist, wobei jeweils n*2 Einzelportionen (13) von insbesondere aufeinander folgenden n Aufnahmepaaren zu einer Füllportion zusammengefasst werden, wobei n ein ganzzahliger Wert größer oder gleich 1 ist, oder wobei jeweils n*2 Einzelportionen (13) von insbesondere aufeinander folgenden n Aufnahmepaaren zusammen mit einer Einzelportion (13) eines weiteren Aufnahmepaares zu einer Füllportion zusammengefasst werden, wobei n ein ganzzahliger Wert größer oder gleich 1 ist.

4. Verfahren gemäß einem oder mehreren der vorhergehenden Ansprüche, **dadurch gekennzeichnet, dass** mindestens eine der zu einer Füllportion zusammenzufassenden Einzelportionen (13) einem steuerbaren Speicher (37) entnommen wird, der zuvor mit ein oder mehreren Einzelportionen (13) befüllt wurde, insbesondere die den n*2 Einzelportionen der n Aufnahmen hinzuzufügende Einzelportion (13) des weiteren Aufnahmepaares.

5. Verfahren gemäß Anspruch 4, **dadurch gekennzeichnet, dass** eine Verteilerstation (36), insbesondere mindestens ein Verteilerorgan (39a, 39b) der Verteilerstation (36), den Aufnahmen (14) des Förderers (12) entstammende Einzelportionen (13) entweder dem Speicher (37) zuführt oder unmittelbar der Pressstation (38).

6. Verfahren gemäß einem oder mehreren der vorhergehenden Ansprüche, **dadurch gekennzeichnet, dass** der Pressstation (38) für jeden Verpressungsvorgang eine der Füllportion entsprechende Anzahl von Einzelportionen (13) zugeführt wird.

7. Verfahren gemäß Anspruch 6, **dadurch gekennzeichnet, dass** der Pressstation (38) für jeden Verpressungsvorgang mindestens eine Einzelportion (13) aus dem Speicher (37) zugeführt wird.

8. Verfahren gemäß einem oder mehreren der vorhergehenden Ansprüche, **dadurch gekennzeichnet, dass** die Füllportion nach der Verpressung der Einzelportionen (13) in einen ihr zugeordneten, bereitgestellten Tabakbeutel (40) der Verpackungsmaschine (11) gefüllt wird, vorzugsweise in einen oben offenen, insbesondere aufrecht angeordneten Beutel (40).

9. Verfahren gemäß einem oder mehreren der vorhergehenden Ansprüche, **gekennzeichnet durch** folgende Schritte:
(a) in einer Portioniereinrichtung (15, 16) kann das Füllgut fein in Einzelportionen (13) portioniert werden, indem eine anhand vorbestimmter Kriterien ermittelte Menge an Füllgut vorportioniert, anschließend gewogen und der gewogene Wert der Füllgutmasse mit einem Sollwert verglichen wird, wobei bei Unterschreitung des Sollwertes der vorportionierten Menge Füllgut hinzugefügt wird, bis der Sollwert erreicht oder überschritten ist,
(b) in der Portioniereinrichtung (15, 16) kann das Füllgut grob in Einzelportionen (13) portioniert werden, indem eine anhand vorbestimmter Kriterien abgeleitete Menge an Füllgut nur einmal portioniert und anschließend gewogen wird, ohne dass dieser Füllgutmenge weiteres Füllgut hinzugefügt wird,
(c) in der Portioniereinrichtung werden zunächst (n-1) Einzelportionen (13) einer für die jeweilige Verpackungseinheit (40) zu bildenden Füllportion der Masse m_{Füllportion} mit n Einzelportionen (13) jeweils grob portioniert und jeweils gewogen,
(d) anschließend wird die Gesamtmasse der (n-1) Einzelportionen (13) ermittelt,
(e) in der Portioniereinrichtung (15, 16) wird anschließend eine weitere Einzelportion (13) fein portioniert, derart, dass die Masse dieser weiteren Einzelportion (13) zusammen mit der Gesamtmasse der (n-1) grob portionierten Einzelportionen (13) die Masse m_{Füllportion} der zu bildenden Füllgutportion ergibt, zumindest annähernd, vorzugsweise exakt,
(f) die portionierten Einzelportionen (13) werden einzeln an den Förderer (12) übergeben und während der Förderbewegung nachverfolgt,
(g) die nachverfolgten Einzelportionen (13) werden zur Bildung der Füllgutportion gemeinsam in die Verpackungseinheit (40) gefüllt, vorzugsweise nach Verpressung derselben.

10. Vorrichtung zur Bildung und Verpackung von Portionen aus faserigem Gut, nämlich Tabak, zur Durchführung des Verfahrens gemäß Anspruch 1, mit einer Portioniereinrichtung (15, 16), mit der Einzelportionen (13) des Füllguts abwiegbar sind, mit einem Förderer (12), mit dem die Einzelportionen (13) einzeln förderbar sind und mit einer Maschine (11) zur Verpackung der Einzelportionen (13) in Verpackungseinheiten (40), nämlich Tabakbeutel, **dadurch gekennzeichnet, dass** mehrere der abgewogenen und geförderten Einzelportionen (13) in einer Pressstation (38) durch Verpressung miteinander zu einer Füllportion zusammenfassbar sind, und dass jeweils eine der auf diese Weise gebildeten Füllportionen in jeweils einen Tabakbeutel (40) füllbar ist.

11. Vorrichtung gemäß Anspruch 10, **dadurch gekennzeichnet, dass** die Vorrichtung über einen mit mindestens einer Einzelportion (13) befüllbaren, steuerbaren Speicher (37) verfügt, in dem die Einzelportion (13) zwischenspeicherbar ist.

12. Vorrichtung gemäß Anspruch 10 oder 11, **dadurch gekennzeichnet, dass** die Vorrichtung über eine stromab des Förderers (12) angeordnete Verteilerstation (36) verfügt, in der die von dem Förderer (12) stammenden Einzelportionen (13) wahlweise unmittelbar der Pressstation (38) zuführbar sind oder dem Speicher (37).

13. Vorrichtung gemäß Anspruch 12, **dadurch gekennzeichnet, dass** die Verteilerstation (36) mindestens ein oberhalb der Pressstation (38) angeordnetes Zellenrad mit mindestens einer Zelle (39.1-39.3) zur Aufnahme von Einzelportionen (13) umfassendes Verteilerorgan (39) aufweist, wobei je nach Drehrichtung des Zellenrades die jeweils in der Zelle (39.1-39.3) angeordnete Einzelportion (13) entweder dem Speicher (37) übergebbar ist, insbesondere einem Zellenrad des Speichers (37), oder der Pressstation (38).

## Claims

1. Method of forming and packaging portions (13) of fibrous material, namely tobacco, in which individual portions (13) of the tobacco, which are formed in particular cyclically from the tobacco (13), are conveyed individually by a conveyor (12) in the direction of a machine (11) for packaging the individual portions (13) in packaging units (40), namely tobacco bags, **characterized by** the following steps:
(a) a number of the individual portions (13) conveyed are fed to a pressing station (38), in which the individual portions (13) are pressed together and combined to form a filling portion,
(b) in each case one of the filling portions formed in this way is introduced into a respective tobacco bag (40).

2. Method according to Claim 1, **characterized in that** the individual portions (13) are conveyed to the pressing station (38) in individual holders (14) of the conveyor (12), each for a single portion, in particular in the buckets of a bucket conveyor, wherein, in particular at an unloading station (35) assigned to the conveyor (12), the individual portions (13) forming the filling portion x are transferred out of the associated holders (14) of the conveyor (12) into the pressing station (38).

3. Method according to one or more of the preceding claims, **characterized in that** the conveyor (12) has pairs of holders (14) arranged in two parallel rows (12a, 12b) for the individual portions (13), wherein in each case n*2 individual portions (13) from in particular successive n pairs of holders are combined to form a filling portion, where n is a whole number greater than or equal to 1, or wherein in each case n*2 individual portions (13) from in particular successive n pairs of holders are combined with an individual portion (13) from a further pair of holders to form a filling portion, where n is a whole number greater than or equal to 1.

4. Method according to one or more of the preceding claims, **characterized in that** at least one of the individual portions (13) which is to be combined to form a filling portion is removed from a controllable store (37) which has been filled beforehand with one or more individual portions (13), in particular the individual portion (13) from the further pair of holders, which can be added to the n*2 individual portions from the n holders.

5. Method according to Claim 4, **characterized in that** individual portions (13) coming from the holders (14) of the conveyor (12) are fed either to the store (37) or directly to the pressing station (38) by a distributor station (36), in particular at least one distributor mechanism (39a, 39b) of the distributor station (36).

6. Method according to one or more of the preceding claims, **characterized in that** a number of individual portions (13) which corresponds to the filling portion is fed to the pressing station (38) for each pressing operation.

7. Method according to Claim 6, **characterized in that** at least one individual portion (13) from the store (37) is fed to the pressing station (38) for each pressing operation.

8. Method according to one or more of the preceding claims, **characterized in that** the filling portion, following the pressing operation of the individual portions (13), is introduced into an associated tobacco bag (40) supplied in the packaging machine (11), preferably into an in particular upright bag (40) which is open at the top.

9. Method according to one or more of the preceding claims, **characterized by** the following steps:
(a) in a portioning device (15, 16), the contents can be portioned precisely into individual portions (13) by a quantity of contents which is established with reference to predetermined criteria being pre-portioned and then weighed, and by the weighed value of the contents mass being compared with a desired value, wherein, in the event of the weighed value falling below the desired value of the pre-portioned quantity, contents are added until the desired value has been reached or exceeded,
(b) in the portioning device (15, 16), the contents are portioned roughly into individual portions (13) by a quantity of contents derived with reference to predetermined criteria being portioned only once and then weighed, without this quantity of contents having any further contents added to it,
(c) in the portioning device, in the first instance (n-1) individual portions (13) of a filling portion of mass m_{filling} portion having n individual portions (13), which is to be formed for the respective packaging unit (40), are each portioned roughly and weighed,
(d) then the total mass of the (n-1) individual portions (13) is established,
(e) in the portioning device (15, 16), a further individual portion (13) is then portioned precisely such that the mass of said further individual portion (13) together with the total mass of the (n-1) roughly portioned individual portions (13) gives at least approximately, preferably precisely, the mass m_{filling} portion of the contents portion which is to be formed,
(f) the portioned individual portions (13) are individually transferred to the conveyor (12) and tracked during the conveying movement,
(g) the tracked individual portions (13) are introduced into the packaging unit (40) together, preferably following the pressing operation of the same, in order to form the contents portion.

10. Apparatus for forming and packaging portions of fibrous material, namely tobacco, for implementing the method according to Claim 1, having a portioning device (15, 16), which can weigh individual portions (13) of the contents, having a conveyor (12), which can convey the individual portions (13) individually, and having a machine (11) for packaging the individual portions (13) in packaging units (40), namely tobacco bags, **characterized in that** a number of the individual portions (13) weighed and conveyed can be combined with one another by a pressing operation in a pressing station (38) to form a filling portion, and **in that** in each case one of the filling portions formed in this way can be introduced into a respective tobacco bag (40).

11. Apparatus according to Claim 10, **characterized in that** the apparatus has a controllable store (37), which can be filled with at least one individual portion (13) and in which the individual portion (13) can be stored on an interim basis.

12. Apparatus according to Claim 10 or 11, **characterized in that** the apparatus has a distributor station (36), which is arranged downstream of the conveyor (12) and in which the individual portions (13) coming from the conveyor (12) can be fed optionally directly to the pressing station (38) or to the store (37).

13. Apparatus according to Claim 12, **characterized in that** the distributor station (36) has at least one distributor mechanism (39) comprising a cellular wheel which is arranged above the pressing station (38) and has at least one cell (39.1-39.3) for accommodating individual portions (13), wherein, depending on the direction of rotation of the cellular wheel, the individual portion (13) arranged in the cell (39.1-39.3) in each case can be transferred either to the store (37), in particular to a cellular wheel of the store (37), or to the pressing station (38).

## Revendications

1. Procédé de formation et d'emballage de portions (13) de produit fibreux, à savoir du tabac, dans lequel des portions individuelles (13) de tabac formées à partir du tabac (13) notamment de manière cadencée sont transportées individuellement avec un transporteur (12) dans la direction d'une machine (11) pour emballer les portions individuelles (13) dans des unités d'emballage (40), à savoir des sachets de tabac, **caractérisé par** les étapes suivantes :
(a) plusieurs des portions individuelles transportées (13) sont acheminées à un poste de pressage (38), dans lequel les portions individuelles (13) sont pressées ensemble et sont réunies pour former une portion de remplissage,
(b) dans chaque cas, l'une des portions de remplissage formées de cette manière est versée dans un sachet de tabac respectif (40).

2. Procédé selon la revendication 1, **caractérisé en ce que** les portions individuelles (13) sont transportées au poste de pressage (38) dans des récipients individuels (14) du transporteur (12) pour chaque portion, en particulier les godets d'un transporteur à godets, les portions individuelles (13) produisant la portion de remplissage x étant transférées dans le poste de pressage (38) notamment au niveau d'un poste de déchargement (35) associé au transporteur (12), à partir des récipients (14) associés à celles-ci du transporteur (12).

3. Procédé selon l'une quelconque ou plusieurs des revendications précédentes, **caractérisé en ce que** le transporteur (12) présente des récipients (14) disposés par paires en deux rangées parallèles (12a, 12b) pour les portions individuelles (13), à chaque fois n*2 portions individuelles (13) de notamment n paires successives de récipients étant réunies pour former une portion de remplissage, n étant un nombre entier supérieur ou égal à 1, ou à chaque fois n*2 portions individuelles (13) de notamment n paires successives de récipients étant réunies à une portion individuelle (13) d'une paire supplémentaire de récipients pour former une portion de remplissage, n étant un nombre entier supérieur ou égal à 1.

4. Procédé selon l'une quelconque ou plusieurs des revendications précédentes, **caractérisé en ce qu'**au moins l'une des portions individuelles (13) à réunir pour former une portion de remplissage est prélevée d'un dispositif de stockage contrôlable (37) qui a été rempli préalablement avec une ou plusieurs portions individuelles (13), notamment la portion individuelle (13) de la paire supplémentaire de récipients devant être ajoutée aux n*2 portions individuelles des n récipients.

5. Procédé selon la revendication 4, **caractérisé en ce qu'**un poste de distribution (36), en particulier au moins un organe de distribution (39a,. 39b) du poste de distribution (36), achemine des portions individuelles (13) provenant des récipients (14) du transporteur (12) soit au dispositif de stockage (37) soit directement au poste de pressage (38).

6. Procédé selon l'une quelconque ou plusieurs des revendications précédentes, **caractérisé en ce que** le poste de pressage (38) pour chaque opération de pressage est alimenté avec un nombre de portions individuelles (13) correspondant à la portion de remplissage.

7. Procédé selon la revendication 6, **caractérisé en ce que** le poste de pressage (38) pour chaque opération de pressage est alimenté avec au moins une portion individuelle (13) provenant du dispositif de stockage (37).

8. Procédé selon l'une quelconque ou plusieurs des revendications précédentes, **caractérisé en ce que** la portion de remplissage, après le pressage des portions individuelles (13), est versée dans un sachet de tabac (40) mis à disposition et associé à celle-ci de la machine d'emballage (11), de préférence dans un sachet (40) ouvert vers le haut, en particulier disposé debout.

9. Procédé selon l'une quelconque ou plusieurs des revendications précédentes, **caractérisé par** les étapes suivantes :
(a) le produit de remplissage peut être mis en portions de manière précise dans des portions individuelles (13) dans un dispositif de mise en portions (15, 16), en mettant préalablement en portions une quantité de produit de remplissage déterminée selon des critères prédéterminés, puis en la pesant et en comparant la valeur pesée de la masse de produit de remplissage avec une valeur de consigne, du produit de remplissage étant ajouté si la quantité préalablement mise en portions est en dessous de la valeur de consigne, jusqu'à ce que la valeur de consigne soit atteinte ou dépassée,
(b) le produit de remplissage peut être mis en portions grossièrement dans des portions individuelles (13) dans le dispositif de mise en portions (15, 16), en mettant seulement une fois en portions une quantité de produit de remplissage déduite d'après des critères prédéterminés puis en la pesant, sans que du produit de remplissage supplémentaire ne soit ajouté à cette quantité de produit de remplissage,
(c) (n-1) portions individuelles (13) d'une portion de remplissage de masse m_{Portion de remplissage} à former avec n portions individuelles (13) pour l'unité d'emballage respective (40) sont d'abord à chaque fois mises en portions grossièrement et à chaque fois pesées dans le dispositif de mise en portions,
(d) ensuite la masse totale des (n-1) portions individuelles (13) est déterminée,
(e) ensuite, dans le dispositif de mise en portions (15, 16), une portion individuelle supplémentaire (13) est mise en portions de manière précise, de telle sorte que la masse de cette portion individuelle supplémentaire (13) conjointement avec la masse totale des (n-1) portions individuelles (13) mises en portions grossièrement produise la masse m_{Portion de remplissage} de la portion de produit de remplissage à former, au moins approximativement, de préférence exactement,
(f) les portions individuelles mises en portions (13) sont transférées individuellement au transporteur (12) et acheminées pendant le mouvement de transport,
(g) les portions individuelles acheminées (13) sont versées ensemble dans l'unité d'emballage (40) pour former la portion de produit de remplissage, de préférence après pressage de celles-ci.

10. Dispositif de formation et d'emballage de portions de produit fibreux, à savoir du tabac, pour mettre en oeuvre le procédé selon la revendication 1, comprenant un dispositif de mise en portions (15, 16), avec lequel des portions individuelles (13) du produit de remplissage peuvent être pesées, comprenant un transporteur (12) avec lequel les portions individuelles (13) peuvent être transportées individuellement et comprenant une machine (11) pour emballer les portions individuelles (13) dans des unités d'emballage (40), à savoir des sachets de tabac, **caractérisé en ce que** plusieurs des portions individuelles pesées et transportées (13) peuvent être réunies ensemble par pressage dans un poste de pressage (38) pour former une portion de remplissage, et **en ce que** dans chaque cas, l'une des portions de remplissage formées de cette manière peut être versée dans un sachet de tabac respectif (40).

11. Dispositif selon la revendication 10, **caractérisé en ce que** le dispositif dispose d'un dispositif de stockage contrôlable (37) pouvant être rempli avec au moins une portion individuelle (13), dans lequel la portion individuelle (13) peut être stockée de manière intermédiaire.

12. Dispositif selon la revendication 10 ou 11, **caractérisé en ce que** le dispositif dispose d'un poste de distribution (36) disposé en aval du transporteur (12), dans lequel les portions individuelles (13) provenant du transporteur (12) peuvent être acheminées de manière sélective directement au poste de pressage (38) ou au dispositif de stockage (37).

13. Dispositif selon la revendication 12, **caractérisé en ce que** le poste de distribution (36) présente au moins un organe de distribution (39) comprenant une roue à cellules disposée au-dessus du poste de pressage (38), avec au moins une cellule (39.1-39.3) pour recevoir des portions individuelles (13), la portion individuelle (13) respective disposée dans la cellule (39.1-39.3) pouvant être transférée à chaque fois en fonction du sens de rotation de la roue à cellules soit au dispositif de stockage (37), en particulier à une roue à cellules du dispositif de stockage (37), soit au poste de pressage (38).
